# EUROPEAN PATENT APPLICATION

(11) **EP 4 375 834 A1**
(43) Date of publication of application: **29.05.2024**
(21) Application number: 22209501.0
(22) Date of filing: 24.11.2022
(51) Int. Cl.: G06F 8/60, H04L 41/08

(54) **APPARATUS AND METHOD FOR DEPLOYING ONBOARDED APPLICATIONS IN A RADIO ACCESS NETWORK CONTROLLER**

(71) Applicant: Nokia Solutions and Networks Oy, 02610 Espoo (FI)
(72) Inventor: HANNÁK, Gábor, 1083 BUDAPEST (HU); SZILÁGYI, Péter, 1083 BUDAPEST (HU); RAUSCHENBACH, Uwe, 81541 MUNICH (DE)
(74) Representative: Novagraaf Technologies

(57) **Abstract**

A method is disclosed for deploying onboarded applications in a radio access network controller, for example in an Open Radio Access Network architecture (O-RAN) as defined by the O-RAN Alliance. The method applies to applications requiring one or more input data types in order to produce one or more output data types, the one or more output data types being linked with said one or more input data types by one or more data type dependencies. The method comprises :
- determining application deployment information for at least one target input data type, based on the data type dependencies of the input and output data types of the onboarded applications, said application deployment information relating to onboarded applications to be deployed in the radio access network controller to produce said target input data type, and
- triggering application deployment based on said application deployment information.

## Description

### TECHNICAL FIELD

Various example embodiments relate generally to apparatus, methods, and computer programs for use in a radio access network.

In particular, the disclosed apparatus, methods, and computer programs apply to applications deployment in a radio access network controller, for example in an Open Radio Access Network architecture (O-RAN) as defined by the O-RAN Alliance.

### BACKGROUND

The O-RAN architecture includes network functions and components and a Service Management and Orchestration layer (SMO) which manages said network functions and components. The SMO layer includes a non-real-time radio access network intelligent controller (Non-RT RIC). The Non-RT RIC enables the intelligent optimization of the radio access network (RAN) in non-real-time by providing policy-based guidance using data analytics and AI/ML models.

The O-RAN ecosystem enables any contributor or vendor to implement its own custom application that provides added value to the operator, for example by generating useful analytics or providing management services (e.g. services to evolve, deploy, optimize or heal the radio access network automatically).

Such custom applications need to be onboarded in the SMO framework and deployed in the non-RT RIC within the SMO framework. In order to function, an application needs to consume input data of one or more input data types. When an application is to be deployed, there is a need to check whether its input data types requirements can be fulfilled. This takes substantial time and resources and involves manual operations.

### SUMMARY

According to some aspects, there is provided the subject matter of the independent claims. Some further aspects are defined in the dependent claims.

According to a first aspect, a method is disclosed, for deploying onboarded applications in a radio access network controller, said applications requiring one or more input data types in order to produce one or more output data types, said one or more output data types being linked with said one or more input data types by one or more data type dependencies, the method comprising : determining application deployment information for at least one target input data type, based on the data type dependencies of the input and output data types of the onboarded applications, said application deployment information relating to onboarded applications to be deployed in the radio access network controller to produce said target input data type, and triggering application deployment based on said application deployment information.

According to a second aspect, an apparatus is disclosed comprising a radio access network controller and hosting onboarded applications to be deployed or already deployed in the radio access controller, said applications requiring one or more input data types in order to produce one or more output data types, said one or more output data types being linked with said one or more input data types by one or more data type dependencies, the apparatus comprising means for determining application deployment information for at least one target input data type, based on the data type dependencies of the input and output data types of the onboarded applications, said application deployment information relating to onboarded applications to be deployed in the radio access network controller to produce said target input data type, and triggering application deployment based on said application deployment information.

In a first embodiment, the application deployment information is determined for a target application to be deployed in the radio access network controller.

In a second embodiment, the method comprises determining application onboarding information relating to at least one target input data type that cannot be produced by deploying said onboarded applications. And the apparatus comprises means for determining application onboarding information relating to at least one target input data type that cannot be produced by deploying said onboarded applications.

In a third embodiment, the method comprises maintaining an inventory of onboarded applications, said inventory comprising for a given application, information about: the one or more input data types required by said given application, the one or more output data types produced by said given application, and the one more dependencies linking the one or more output data types produced by said given application with the one or more input data types required by said given application. And the apparatus comprises means for maintaining an inventory of onboarded applications, said inventory comprising for a given application, information about : the one or more input data types required by said given application, the one or more output data types produced by said given application, and the one more dependencies linking the one or more output data types produced by said given application with the one or more input data types required by said given application.

In a fourth embodiment, the application deployment information is delivered in the form of a data structure comprising one or more input data types including the at least one target input data type, and for a given data type in said input data structure, information about: whether the given input data type is produced by an application already deployed in the radio access network controller, one or more alternatives of undeployed onboarded application that produce the given input data type, and the one or more input data types required by said one or more alternatives.

In a fifth embodiment, the method comprises pruning said data structure to keep one single alternative of undeployed onboarded application per input data type in the data structure. And the apparatus comprises means for pruning said data structure to keep one single alternative of undeployed onboarded application per input data type in the data structure.

In a sixth embodiment, the method comprises deriving ordering constraints for application deployment based on said data structure to comply with the data type dependencies. And the apparatus comprises means for deriving ordering constraints for application deployment based on said data structure to comply with the data type dependencies.

In a seventh embodiment, the method comprises registering the output data types of a given deployed application for exposure in the radio access network, subject to all input data types required by said given deployed application being available from one or more other deployed applications such that the given deployed application can produce output data for all of its output data types. And the apparatus comprises means for registering the output data types of a given deployed application for exposure in the radio access network, subject to all input data types required by said given deployed application being available from one or more other deployed applications such that the given deployed application can produce output data for all of its output data types.

In an eighth embodiment, the method further comprises controlling a radio access network controlled by said radio access network controller, based on output data of the one or more data types produced by one or more applications deployed in the radio access network controller. And the apparatus further comprises means for controlling a radio access network controlled by said radio access network controller, based on output data of the one or more output data types produced by one or more applications deployed in the radio access network controller.

In a third aspect, a computer program is disclosed which comprises instructions for implementing a method as disclosed above when said instruction are executed by a computer.

According to a fourth aspect, a data structure is disclosed for use in the context of the deployment of onboarded applications in a radio access network controller, said applications requiring one or more input data types in order to produce one or more output data types, said data structure comprising one or more input data types including at least one target input data type, and, for a given input data type in said data structure, information about: whether the given input data type is produced by an application already deployed in the radio access network controller, one or more alternatives of undeployed onboarded application that produce the given input data type, and the one or more input data types required by said one or more alternatives.

According to the fifth aspect, a data structure is disclosed for use in the context of the deployment of onboarded applications in a radio access network controller, said applications requiring one or more input data types in order to produce one or more output data types, said data structure comprising an inventory of onboarded applications, said inventory comprising for a given application, information about : the one or more input data types required by said given application, the one or more output data types produced by said given application, and one more dependencies linking the one or more output data types produced by said given application with the one or more input data types required by said given application.

According to another aspect, an apparatus is disclosed comprising a radio access network controller and hosting onboarded applications to be deployed or already deployed in the radio access controller, said applications requiring one or more input data types in order to produce one or more output data types, said one or more output data types being linked with said one or more input data types by one or more data type dependencies, the apparatus comprising at least one processor and at least one memory storing instructions that, when executed by the at least one processor, cause the apparatus to at least determine application deployment information for at least one target input data type, based on the data type dependencies of the input and output data types of the onboarded applications, said application deployment information relating to onboarded applications to be deployed in the radio access network controller to produce said target input data type, and trigger application deployment based on said application deployment information.

According to another aspect, a non-transitory computer readable medium is disclosed which comprises program instructions that, when executed by an apparatus, causes the apparatus to implement a method as disclosed above.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1 is a schematic representation of an example of a chain of dependencies involved for producing an input data type.
FIG.2 is a block diagram illustrating several embodiments of a method for deploying onboarded applications in a radio access network controller as disclosed herein.
FIG.3 is a schematic representation of an example of an application consuming input data types to produce output data types.
FIG.4 is a block diagram showing an example of an implementation of the method of FIG.2 in an O-RAN architecture.
FIG.5 is a flow diagram of an example of a method for parallel and unordered deployment of applications.
FIG.6 is a schematic diagram of an example embodiment of an apparatus comprising circuitry configured to perform the methods described herein.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

An open radio access network (RAN) architecture includes a management and orchestration layer to manage the network functions and components. This layer includes a logical entity operating in non-real-time, usually referred to a radio access network controller. This radio access network controller enables the intelligent optimization of the radio access network in non-real time by providing a platform of applications which bring added value to the network operation, for example in the form of data analytics and AI/ML models.

In such an open architecture, any contributor or vendor can provide its owned custom added value applications. Such custom applications need to be onboarded in the framework of the management and orchestration layer and deployed in the radio access network controller. Once deployed, an application generates output data which, alone or in combination with output data of other deployed applications, enables the radio access network controller to control the radio access network. For example the output data are KPI or predictions.In the following of the description the disclosed method and apparatus will be presented, by way of example, in the context of the O-RAN specification as defined by the O-RAN alliance. This is not limitative. The concepts disclosed herein are applicable in other environments.

In an O-RAN architecture, the management and orchestration layer is referred to as SMO and the radio access network controller which operates in non-real time is referred to as Non-RT RIC. Applications deployed or to be deployed in the Non-RT RIC controller are referred to as rApps.

For onboarding in the SMO framework, an application is included in an application package which includes metadata in a set of descriptors that controls its deployment (for example a deployment descriptor, a RTE (runtime environment) descriptor, etc). For example, information and requirements specific to the runtime environment of the application can be provided in the RTE descriptor.

Applications which are onboarded in the SMO framework are registered in an inventory of the SMO framework. An onboarded applications can be deployed in the Non-RT RIC or can remain undeployed.

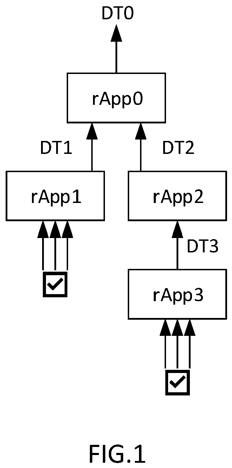

An application consumes input data of one or more input data types in order to produce output data of one or more output data types. In other words, an application has input data types requirements that need to be fulfilled for the application to function and produce output data types. For example, the input data types required by the application can be produced by another application. And the output data types produced by the application can in turn be input data types to other applications. Output data types are linked with input data types by one or more data type dependencies as will be described further below by reference to FIG.1.

For example, a data type can be a KPI or a prediction, defined with attributes which may include, but are not restricted to, data collection granularity, storage / streaming / buffering capability, accuracy, confidence interval, syntax.

FIG.1 illustrates an exemplary chain of dependencies which may be involved for producing a required data type DT0. As depicted in FIG.1, the required data type DT0 can be produced by a first undeployed application rApp0. Application rApp0 requires a first and a second data types DT1 and DT2 to be able to produce the required data type DT0. The first datatype DT1 can be produced by a second undeployed application rApp1 which has no unfulfilled input requirements. The second data type DT2 can be produced by a third undeployed application rApp2 which requires a third data type DT3 as input. And the third data type DT3 can be produced by a fourth undeployed application rApp3 which has no unfulfilled input requirements.

In this example, four applications must be deployed in order to produce the required data type DT0 :
- the fourth application rApp3 to produce the third data type DT3,
- the third application rApp2 to produce the second data type DT2 based on the third data type DT3,
- the second application rApp1 to produce the first data type DT1, and
- the first application rApp0 which will produce the required data type DTO based on the input data types DT1 and DT2.

As can be seen from this example, providing the required data type DT0 implies a recursive process of checking input data types requirements and deploying applications accordingly, assuming that the required applications are already onboarded in the SMO framework and available for deployment in the controller. If any of the four applications is not onboarded, the required data type DT0 cannot be produced.

In general, at runtime, when a target input data type is to be produced (or a target application is to be deployed), it is not known in advance whether the input data types requirements can be fulfilled. This requires a recursive/iterative check and each required application must be deployed which in turn may require other input data types to function. Whether this iterative check and deployment process will succeed or fail, and how many resources will be required is not known in advance. This may result in wasting substantial amounts of resources and time, since the process may fail after many lookups and deployments, which then may have to be rolled back, or be stalled for extensive periods of time until a resolution is possible.

The disclosed method analyzes the data type dependencies of the input and output data types of the onboarded applications in the SMO framework (whether deployed or undeployed) and determines application deployment information for one or more target input data types (or respectively one or more target applications). This application deployment information indicates onboarded applications to be deployed in the radio access network controller to produce the one or more target input data types (or respectively the input data types of the one or more target applications). The method further comprises triggering application deployment based on the application deployment information.

In an embodiment, when some dependencies cannot be resolved using any combination of the currently onboarded applications, the method further comprises deriving a list of unfulfilled requirements or unresolved dependencies.

In an embodiment, if an already deployed application requests/subscribes to a data type which is not available, the method further comprises triggering a dependency resolution with this unavailable data type as target data type.

In an embodiment, the method further comprises controlling the radio access network controller based on output data of one or more deployed applications.

In the following of the description, the term target is used interchangeably to refer to either one or more target input data types or one or more target applications.

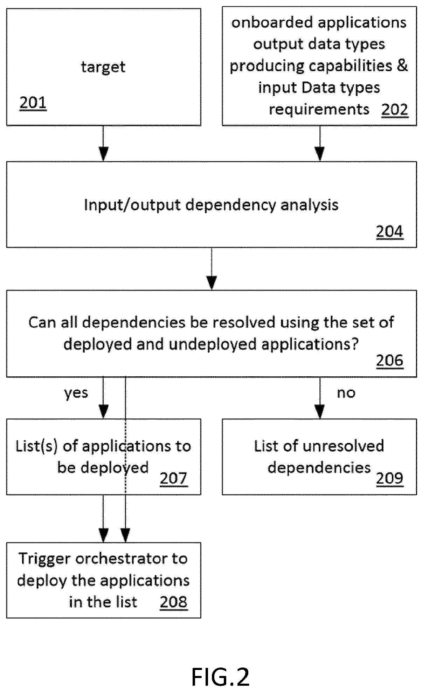

FIG.2 is a block diagram representing embodiments of a method for deploying onboarded applications in a radio access network controller. The method uses two types of input:
- a first type of input 201 comprising one or more target input data types to be produced, or respectively the input data types of one or more target applications to be deployed in the controller;
- a second type of input 202 comprising output data types producing capabilities and input data types requirements of onboarded applications.

At step 204, based on input 201 and 202, the input/output dependencies of the onboarded applications are analysed. At step 206, a check is done to determine if all dependencies associated with the target can be resolved by using the deployed and undeployed applications. If yes, one or more lists are derived at step 207 containing one or more undeployed applications that must be deployed to resolve the dependencies. This list constitutes application deployment information which is used at step 208 to trigger application deployments. If on the contrary, some dependencies cannot be resolved using any combination of the currently onboarded applications, in a specific embodiment of the method, a list of unfulfilled requirements or unresolved dependencies is derived at step 209.

At onboarding, the application package is provided to the SMO and stored in the inventory of the SMO. It includes a set of descriptors that controls the deployment of the application. One of these descriptors carries information about the application requirements. For example in an O-RAN environment the descriptor carrying this information can be the deployment descriptor or the runtime environment (RTE) descriptor.

This application requirements information comprises information about the input data types requirements of the application (e.g, data type, schema, frequency, semantics), information about the output data types capabilities of the application, and also the dependencies between those, for example the input data types requirements per output data types that can be produced by the application.

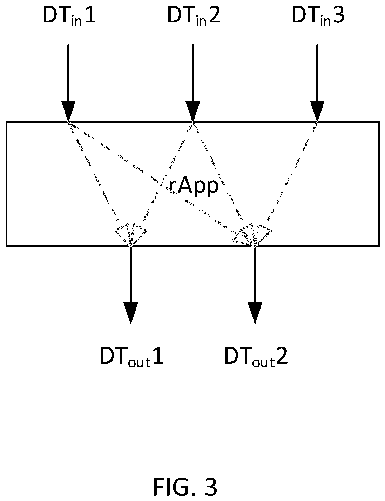

In an exemplary embodiment, the input data types requirements are made specific to each output data types produced by the application to enable more flexible application dependency resolution. This is illustrated by reference to FIG.3.

FIG.3 depicts an application rAppn which can produce a first output data type DTout1 when it is given a first and a second input data types DTin1 and DTin2. When the application rAppn additionally ingests a third input data type DTin3, it can also produce a second output data type DTout2. In this example, there is a data type dependencdata type dependency between the first output data type DTout1 and the first and second input data types DTin1 and DTin2 on the one hand, and a data type dependencdata type dependency between the second output data type DTout2 and the first, second and third input data types DTin1, DTin2 and DTin3 on the other hand.

In this example, if the application rAppn is not required (e.g. per its deployment configuration) to produce the data type DTout2, then there is no need to find an application that can produce the data type DTin3 in order to deploy the application rAppn.

If the application rAppn simply declares dependencies in a monolithic way (all output data types, DTout1 and DTout2, monolithically depending on all input data types DTin1, DTin2 and DTin3, without further information about the dependencies between each input data type and each output data type), it is necessary to find an application that can produce the third input data type DTin3 in order to be able to deploy the application rAppn, although the input data type DTin3 may eventually not even be used by the application rAppn.

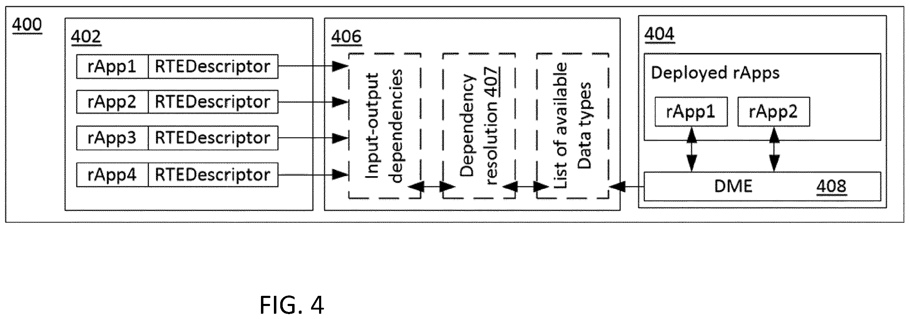

FIG.4 is a block diagram showing an example of implementation of the method of FIG.2 in a SMO framework in an O-RAN architecture. The SMO framework 400 comprises an inventory 402, a non-RT RIC controller 404 and an orchestrator 406 which comprises a dependency resolution entity 407. The inventory 402 comprises a repository of onboarded applications and hosts the application package for the onboarded applications. The application package of a specific application comprises a descriptor with information about the application requirements. The non-RT RIC controller 404 comprises deployed applications. The non-RT RIC controller 404 advertises the output data types produced by the deployed applications through a Data Management and Exposure service (DME) for data discovery which is referenced 408 in FIG.4.

The DME 408 implements mechanisms of the O-RAN R1 services in the Non-RT RIC controller 404, which include registration, deregistration, exposure of available data types, and notification about changes in the availability of data types.

In the example of FIG.4, the inventory 402 comprises four onboarded applications rApp1, rApp2, rApp3 and rApp4. Two of them, rApp1 and rApp2 are deployed in the non-RT RIC controller 404.

The orchestrator 406 can obtain the list and details of already available data types (i.e. data types produced by already deployed applications) from the DME 408. It can obtain the input-output data type dependencdata type dependencies of all onboarded applications from the inventory 402. Based on these two sets of information, the dependency resolution entity 407 can perform a data type dependency resolution for one or more target input data types or one or more target applications to be deployed in the controller.

Given these two inputs, the dependency resolution entity 407 can discover all dependencies of the output data types to be produced in order to fulfil the target. The dependency resolution entity 407 searches and returns one or more lists of onboarded applications that, if deployed, would satisfy all input-output data types requirements of the target, and recursively of all applications which are necessary to fulfil all requirements of the target. This can be done by several known methods, for example by creating and maintaining a dependency graph, by performing a codebook search or a recursive search etc.

If the list obtained by the dependency resolution entity 407 is empty, no additional applications need to be deployed because all data types requirements are already fulfilled by the already deployed applications. In this case, optionally, the dependency resolution entity 407 returns not an empty list, but an indication that it has performed the analysis and every requirement is already fulfilled.

If there is no combination of onboarded applications in the inventory 402 whose joint deployment and data production would result in fully fulfilling the requirements of the target, in a specific embodiment, the dependency resolution entity 407 returns a partial or empty list of required applications, combined with an error/warning/indication indicating that there will be unfulfilled requirements, optionally with a list of input data types requirements that cannot be fulfilled.

In another embodiment, the returned information is not simply a set of one or more lists of applications to be deployed, but a structured data representation. In addition to providing one or more lists of onboarded and undeployed applications whose joint deployment would satisfy the requirements, this data structure also provides the data type dependencies between them. An example of such a data structure corresponding to the target input data type DT0 described in FIG.1 is given below in JSON language.

| |
|---|
| ```
{
   "type": "DT0",
   "available": false,
   "deployableProducerAlternatives": [
     {
        "name": "rApp0",
        "requires": [
           {
             "type": "DT1",
             "available": false,
             "deployableProducerAlternatives": [
                {
                   "name": "rApp1",
                   "requires": []
                }
             ]
           }, {
             "type": "DT2",
             "available": false,
             "deployableProducerAlternatives": [
                {
                   "name": "rApp2",
                   "requires": [
                      {
                        "type": "DT3",
                        "available": false,
                        "deployableProducerAlternatives": [
                           {
                              "name": "rApp3",
                              "requires": []
                           }
                        }
                      }
                }
             ]
           }
        ]
     }
   ]
   }
``` |

A dangling dependency ("available" set to *false* combined with an empty list of "deployableProducerAlternatives" or the "deployableProducerAlternatives" structure absent) indicates that no producer of a required data type is currently available for deployment, i.e. the data type can't be produced by any of the applications onboarded in the SMO framework. The flag "available" set to *true* indicates that a required data type is available and there is no need to deploy a producer application, hence, the "deployableProducerAlternatives" array must be absent in that case.

If multiple applications are able to produce a required data type, these are listed as alternatives under "deployableProducerAlternatives". Advantageously, before starting the deployment, the data structure is pruned by choosing one of the alternatives based on deployment-specific criteria, such as minimizing the number of applications to deploy (a particular application may occur in multiple "deployableProducerAlternatives" lists). After pruning, the data structure can be converted into a list of applications to be deployed, and/or a list of unproducible data types. Using different pruning strategies, different lists of applications can be created.

Based on the one or more lists or data structures provided by the dependency resolution entity 407, the orchestrator 406 deploys the onboarded applications which are necessary to satisfy the target requirements.

In an embodiment, based on the data structure provided by the dependency resolution entity 407, the orchestrator derives constraints on the deployment order of the involved data producers and data consumers, and enforces these constraints when deploying the applications.

For example, the orchestrator 406 can recursively traverse the data structure and deploy all children of a given application listed in the data structure before deploying the given application itself. However, such deployment method requires waiting for the deployment and confirmed readiness of all those applications that produce a required input data type before an application can be deployed that produces an output data type based on that input data type. Such a scheme, even though advantageous when determinism of deployment sequence is required, has the drawback that it prolongs deployment time.

Parallel instantiation of all applications detected to contribute directly or indirectly to the production of the target can speed up deployment. Such a deployment scheme requires that only output data types are registered in the DME 408 that can actually be produced based on the input data types already available in the DME 408. This ensures consistency during the phase when multiple data consumer / data producer applications become available in the non-RT RIC in arbitrary order, for instance because they are deployed in parallel or without caring about order.

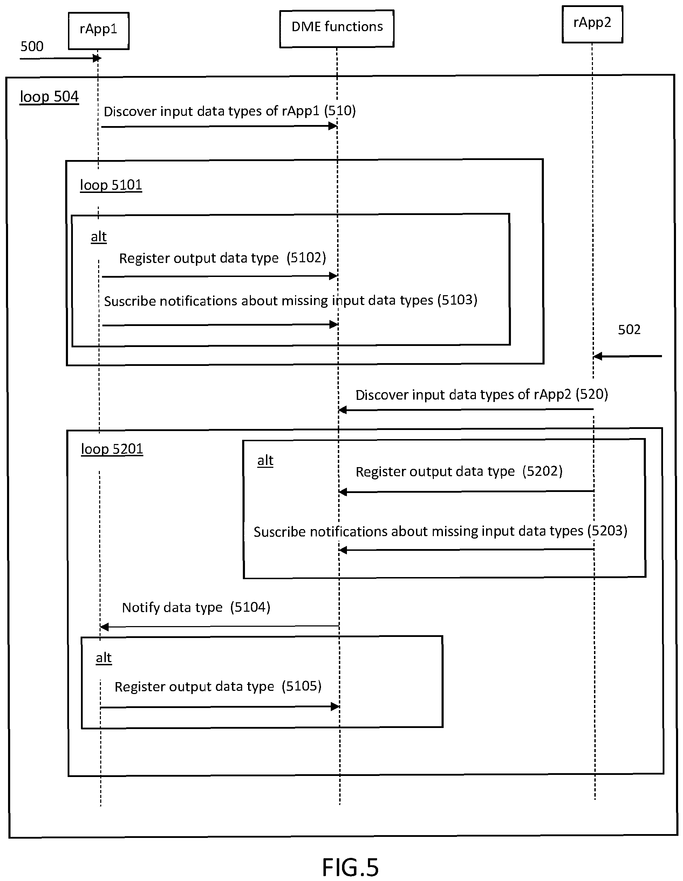

FIG.5 is a flow diagram of an example of a method for parallel and unordered deployment of applications. In FIG.5, for the sake of simplicity, only two applications rApp1 and rApp2 are represented. This is not limitative. In the example of FIG.5, the orchestrator 406 first triggers the deployment of application rApp1 (step 500) and subsequently triggers the deployment of application rApp2 (step 502).

As illustrated in FIG.5, the first application which is deployed, rApp1, implements a loop 504 until all output data types of all applications to be deployed can be produced in the non-RT RIC controller 404.

The loop 504 comprises:
- a first discovery 510 by the first application rApp1, through the DME service for data discovery, of the input data types of the first application rApp1;
- a second discovery 520 by the second application rApp2, through the DME service for data discovery of the input data types of the second application rApp2.

The first discovery 510 is implemented with a loop 5101 which comprises checking, for all output data types of the first application rApp1, if all input data types were discovered. If all input data types were discovered for a given output data type of the first application rApp1, the given output data type is registered with the DME 408 at step 5102. If for given output data type, one or more input data types are missing, the first application rApp1 subscribes a notification with the DME 408 about the missing input data types at step 5103.

Similarly, the second discovery 520 is implemented with a loop 5201 which comprises checking, for all output data types of the second application rApp2, if all input data types were discovered. If all input data types were discovered for a given output data type of the second application rApp2, the given output data type is registered with the DME 408 at step 5202. If for given output data type, one or more input data types are missing, the second application rApp2 subscribes a notification with the DME 408 about the missing input data types at step 5203.

At step 5204, the DME 408 notifies the first application rApp1 with a missing data type. At step 5205, if all input data types for a given output data type of the first application rApp1 were discovered, the output data type is registered with the DME 408.

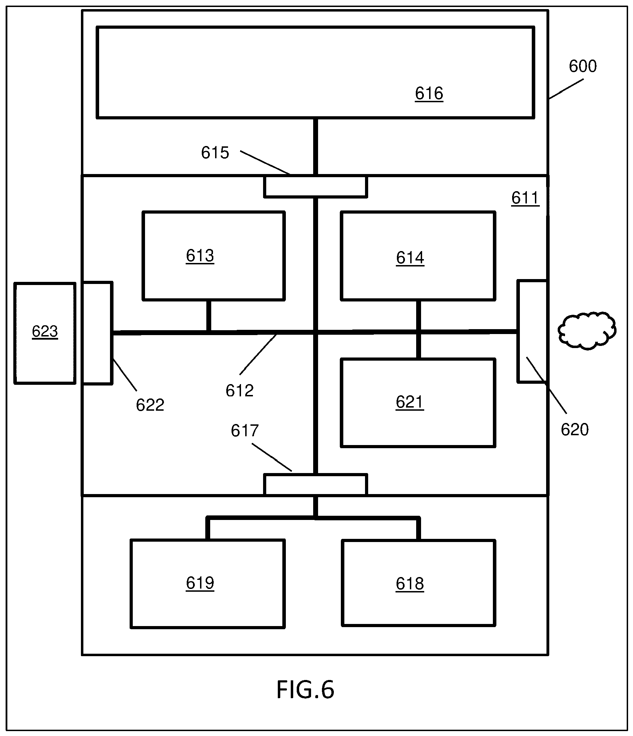

FIG.6 depicts a high-level block diagram of an apparatus 600 suitable for implementing various aspects of the disclosure. Although illustrated in a single block, in other embodiments the apparatus 600 may also be implemented using parallel and distributed architectures. Thus, for example, various steps such as those illustrated in the apparatus and methods described above by reference to FIG.1 to 5 may be executed using apparatus 600 sequentially, in parallel, or in a different order based on particular implementations.

According to an exemplary embodiment, depicted in FIG.6, apparatus 600 comprises a printed circuit board 611 on which a communication bus 612 connects a processor 613 (e.g., a central processing unit "CPU"), a random access memory 614, a storage medium 621, an interface 615 for connecting a display 616, a series of connectors 617 for connecting user interface devices or modules such as a mouse or trackpad 618 and a keyboard 619, a wireless network interface 620 and a wired network interface 622. Depending on the functionality required, the apparatus may implement only part of the above. Certain modules of FIG.6 may be internal or connected externally, in which case they do not necessarily form integral part of the apparatus itself. For example display 616 may be a display that is connected to the apparatus only under specific circumstances, or the apparatus may be controlled through another device with a display, i.e. no specific display 616 and interface 615 are required for such an apparatus. Memory 621 contains software code which, when executed by processor 613, causes the apparatus 600 to perform the methods described herein. Storage medium 623 is a detachable device such as a USB stick which holds the software code which can be uploaded to memory 621.

The processor 613 may be any type of processor such as a general purpose central processing unit ("CPU") or a dedicated microprocessor such as an embedded microcontroller or a digital signal processor ("DSP").

In addition, apparatus 600 may also include other components typically found in computing apparatus, such as an operating system, queue managers, device drivers, or one or more network protocols that are stored in memory 621 and executed by the processor 613.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used in this application, the term "circuitry" may refer to one or more or all of the following:
(a) hardware-only circuit implementations (such as implementations in only analog and/or digital circuitry), and
(b) combinations of hardware circuits and software, such as (as applicable):
   (i) a combination of analog and/or digital hardware circuit(s) with software/firmware, and
   (ii) any portions of hardware processor(s) with software (including digital signal processor(s)), software, and memory(ies) that work together to cause an apparatus, such as a mobile phone or server, to perform various functions), and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A method for deploying onboarded applications in a radio access network controller, said applications requiring one or more input data types in order to produce one or more output data types, said one or more output data types being linked with said one or more input data types by one or more data type dependencies, the method comprising :
- determining application deployment information for at least one target input data type, based on the data type dependencies of the input and output data types of the onboarded applications, said application deployment information relating to onboarded applications to be deployed in the radio access network controller to produce said target input data type, and
- triggering application deployment based on said application deployment information.

2. An apparatus comprising a radio access network controller and hosting onboarded applications to be deployed or already deployed in the radio access controller, said applications requiring one or more input data types in order to produce one or more output data types, said one or more output data types being linked with said one or more input data types by one or more data type dependencies, the apparatus comprising means for :
- determining application deployment information for at least one target input data type, based on the data type dependencies of the input and output data types of the onboarded applications, said application deployment information relating to onboarded applications to be deployed in the radio access network controller to produce said target input data type, and
- triggering application deployment based on said application deployment information.

3. A method as claimed in claim 1 or an apparatus as claimed in claim 2, wherein the application deployment information is determined for a target application to be deployed in the radio access network controller.

4. A method as claimed in claim 1 or 3, further comprising determining application onboarding information relating to at least one target input data type that cannot be produced by deploying said onboarded applications.

5. An apparatus as claimed in claim 2 or 3, further comprising means for determining application onboarding information relating to at least one target input data type that cannot be produced by deploying said onboarded applications.

6. A method as claimed in claims 1 or 3 or 4, comprising maintaining an inventory of onboarded applications, said inventory comprising for a given application, information about:
- the one or more input data types required by said given application,
- the one or more output data types produced by said given application, and
- the one more dependencies linking the one or more output data types produced by said given application with the one or more input data types required by said given application.

7. An apparatus as claimed in any of claims 1 to 3, said apparatus comprising an inventory of onboarded applications, said inventory comprising for a given application, information about:
- the one or more input data types required by said given application,
- the one or more output data types produced by said given application, and
- the one more dependencies linking the one or more output data types produced by said given application with the one or more input data types required by said given application.

8. A method as claimed in claim 6 or an apparatus as claimed in claim 7, wherein the application deployment information is delivered in the form of a data structure comprising one or more input data types including the at least one target input data type, and for a given data type in said input data structure, information about:
- whether the given input data type is produced by an application already deployed in the radio access network controller,
- one or more alternatives of undeployed onboarded application that produce the given input data type, and
- the one or more input data types required by said one or more alternatives.

9. A method as claimed in claim 8, further comprising pruning said data structure to keep one single alternative of undeployed onboarded application per input data type in the data structure.

10. An apparatus as claimed in claim 7, further comprising means for pruning said data structure to keep one single alternative of undeployed onboarded application per input data type in the data structure.

11. A method as claimed in any of claims 8 or 9, further comprising deriving ordering constraints for application deployment based on said data structure to comply with the data type dependencies.

12. An apparatus as claimed in any of claims 7 or 10, further comprising means for deriving ordering constraints for application deployment based on said data structure to comply with the data type dependencies.

13. A method as claimed in claim 11, comprising registering the output data types of a given deployed application for exposure in the radio access network, subject to all input data types required by said given deployed application being available from one or more other deployed applications such that the given deployed application can produce output data for all of its output data types.

14. An apparatus as claimed in claim 12, comprising means for registering the output data types of a given deployed application for exposure in the radio access network, subject to all input data types required by said given deployed application being available from one or more other deployed applications such that the given deployed application can produce output data for all of its output data types.

15. A computer program comprising instructions for implementing a method as claimed in any of claims 1, 3, 4, 6, 8, 9, 11, or 13 when said instruction are executed by a computer.

16. A method as claimed in any of claims 1, 3, 4, 6, 8, 9, 11 or 13, further comprising controlling a radio access network controlled by said radio access network controller, based on output data of the one or more output data types produced by one or more applications deployed in the radio access network controller.

17. An apparatus as claimed in any of claims 2, 3, 5, 7, 8, 10, 12, or 14, further comprising means for controlling a radio access network controlled by said radio access network controller, based on output data of the one or more output data types produced by one or more applications deployed in the radio access network controller.
